Europäisches Patentamt

(19) European Patent Office

Office européen des brevets

(11) Publication number: **0 007 138**
**A1**

# EUROPEAN PATENT APPLICATION

(21) Application number: **79200369.1**

(22) Date of filing: **06.07.79**

(51) Int. Cl.³: **G 11 B 1/02**
**G 11 B 23/02**

(30) Priority: **13.07.78 IT 2996278**

(43) Date of publication of application:
**23.01.80 Bulletin 80/2**

(84) Designated Contracting States:
**BE CH DE FR GB LU NL SE**

(71) Applicant: **S.r.l. AUTOMELODY**
**55/3, Via Dante Alighieri**
**I-42023 Cadelbosco Sopra (Reggio Emilia)(IT)**

(72) Inventor: **Bonilauri, Pietro**
**55/3, Via Dante Alighieri**
**I-42023 Cadelbosco Sopra Reggio Emilia(IT)**

(74) Representative: **Corradini, Corrado**
**4, Via Sessi**
**I-42100 Reggio Emilia(IT)**

(54) A rigid object pocket with musicassette compartment, for fixing to the inside of automobile doors.

(57) A rigid object pocket (1) for fixing on the inside of an automobile door, comprising a parallelepiped compartment (2) receding from its front wall and provided with a down-wardly swivelling cover (3), and pairs of inner ribs (22) for supporting and housing small parallelepiped objects such as musicassettes (13).

FIG.1

EP 0 007 138 A1

- 1 -

A rigid object pocket with musicassette compartment, for fixing to the inside of automobile doors

Many motor vehicles are provided with playback equipment for recorded magnetic tapes. These tapes are notably always wound on spools housed in suitable plastics cases known as musicassettes or the like.

The motorist always keeps a certain number of musicassettes available in the automobile. Although these musicassettes are relatively small, they have a certain bulk and also need to be preserved carefully, to prevent damaging the unprotected tape portion.

For this purpose, plastics containers have been used for some time as musicassette holders, which can be fitted under the dashboard or kept separately in any part of the passenger compartment.

The disadvantage of these containers is that it is difficult to find a place to fix them in the passenger compartment which is handy for the driver. When the driver is driving, he must not be excessively distracted, and needs to be able to easily find the musicassette or spool container which he requires, practically by touch.

The present invention provides a relatively economical rigid·pocket of moulded plastics which can be fitted to the inside of a door, possibly replacing the object pocket already present there, and which acts simultaneously as a container for musicassettes which can be inserted in order in suitable guides, and as a normal pocket or holder for various objects, which is accessible from the top.

The details of the invention will be more apparent from the figures of the accompanying drawings in which:

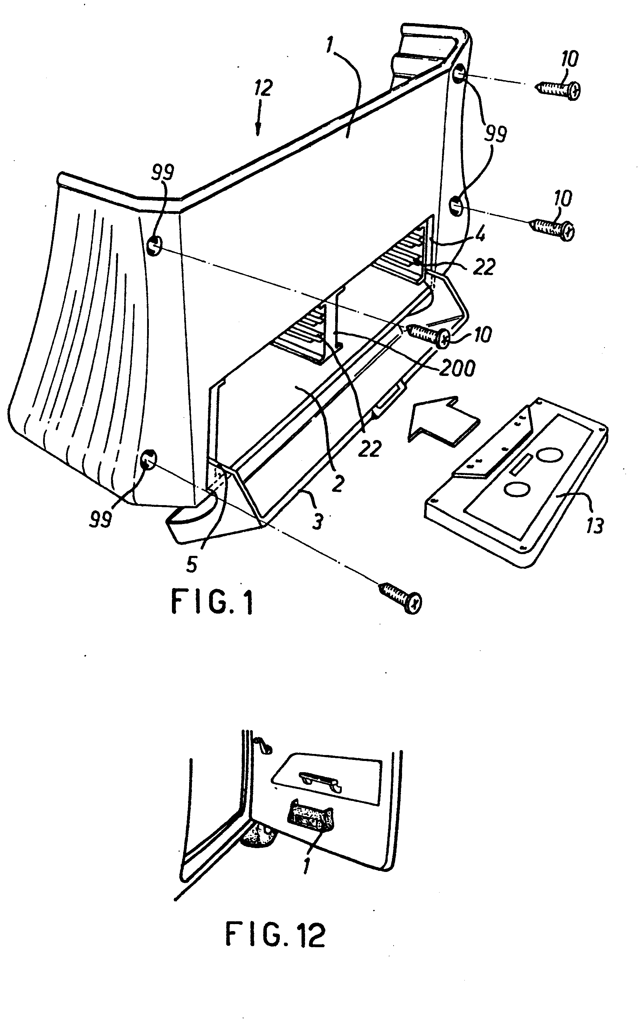

- FIG. 1 is a partly exploded perspective view of the rigid pocket;
- FIG. 2 is a front view of the rigid pocket;
- FIG. 3 is a section on the line III-III of FIG. 2;
- FIG. 4 is a side view of the rigid pocket;

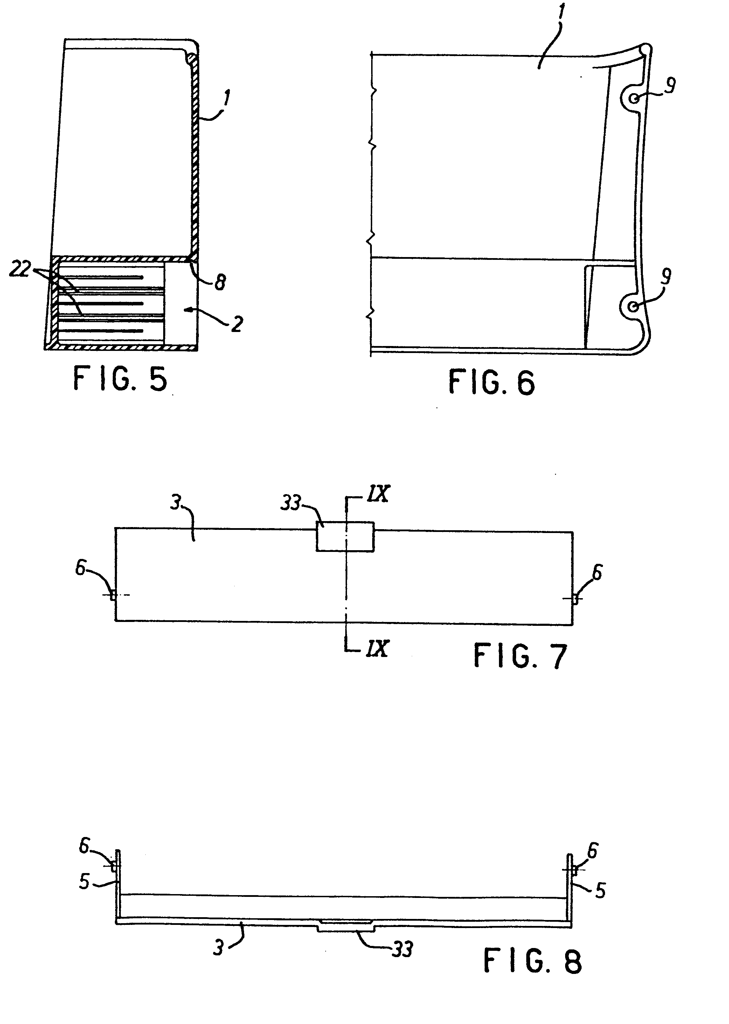

- FIG. 5 is a section on the line V-V of FIG. 2;
- FIG. 6 is a rear view of the right hand half of the rigid pocket;
- FIG. 7 is a front view of the downwardly tilting door with which the rack for the musicassettes can be opened and closed;
- FIG. 8 is a plan view of the tilting door;
- FIG. 9 is a cross-section through the door on the line IX-IX of FIG. 7;
- FIG. 10 shows an enlarged detail of FIGS. 5 and 9, for the purpos of showing the engagement between the door and the rigid pocket;

- FIG. 11 is a partial view of the cross-section on the line XI-XI of FIG. 3;

- FIG. 12 shows the invention fitted to an automobile door.

With reference to said figures, these show a rigid object container or pocket 1 which is open at its top and back, and comprises a compartment 2 accessible from the outside for housing musicassettes. The container 1 is of plastics construction and is in a single piece. The compartment 2 comprises ribs 22 for supporting the musicassettes, which are arranged horizontally. It is obvious that said ribs could also be arranged vertically. In the case illustrated, the compartment is divided into two by the vertical wall 200, which supports two sets of ribs 22 on its sides.

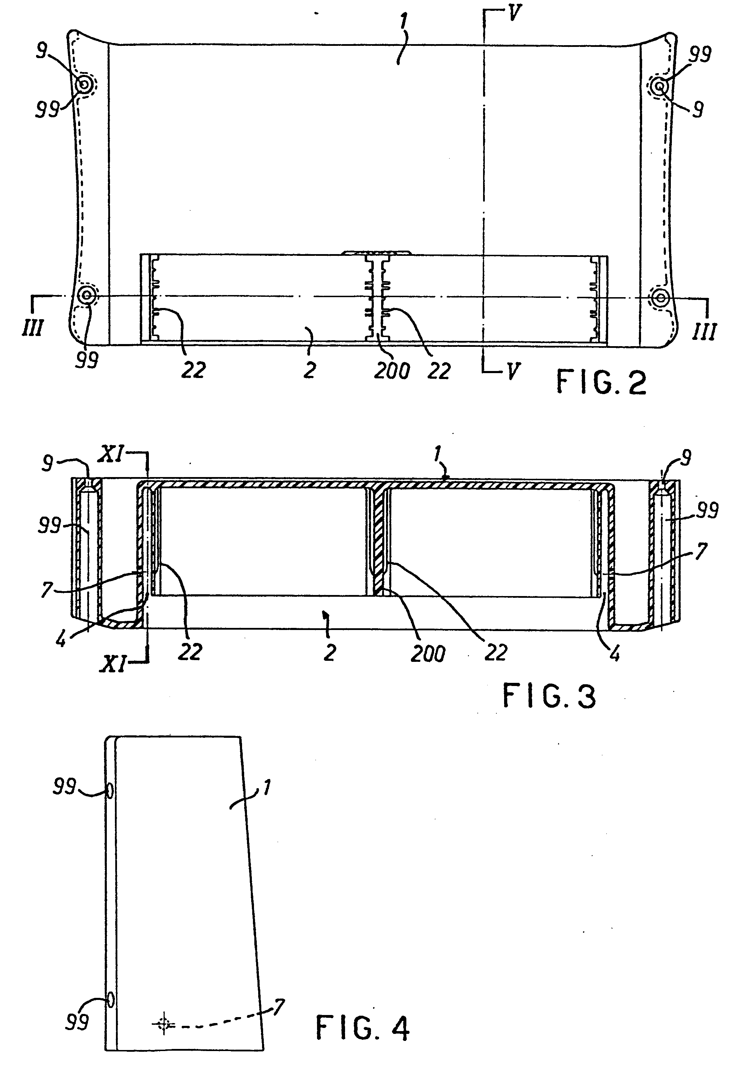

A downwardly swivelling cover 3 is provided for closing the compartment 2. The compartment 2 comprises two symmetrical side interspaces 4 (see FIG. 3) arranged to receive the side lugs 5 of the cover 3. These lugs are provided with two external cylindrical protuberances 6 which are inserted resiliently into the bores 7 provided in the external walls of the interspaces 4.

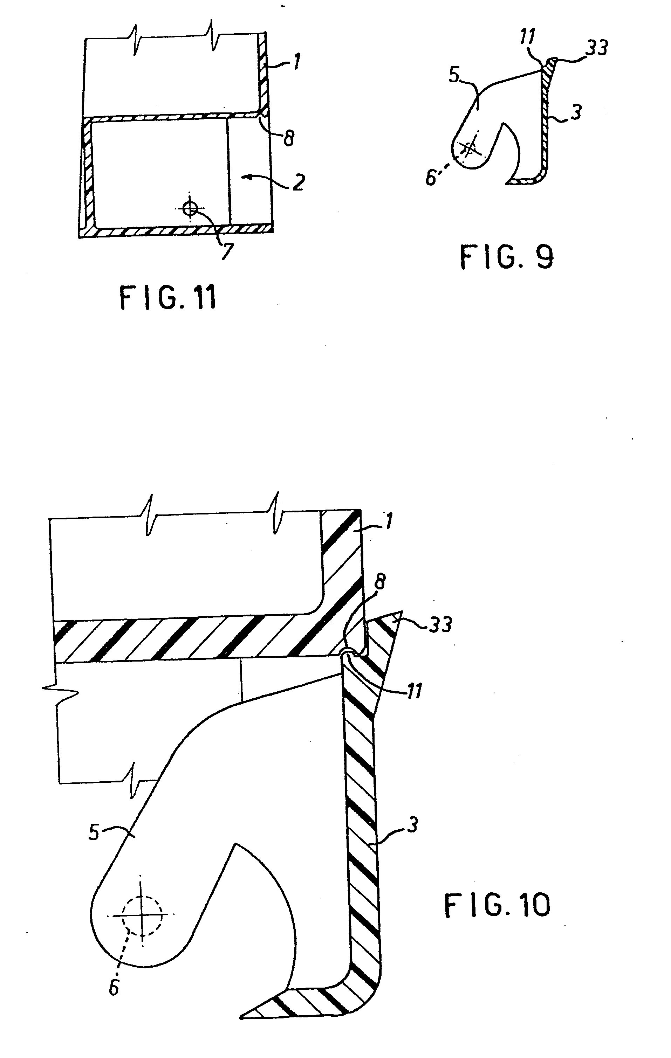

The upper perimetral edge of the compartment 2 comprises a groove 8 into which is resiliently inserted the upper edge 11 of the cover 3, which thus remains locked (see FIG. 10). Said cover comprises a raised portion 33 at its centre to facilitate opening.

Four bores 9 at the base of four cylindrical cavities 99 receive screws 10 for fixing the container to the automobile door. When fixed to the door, the invention provides an upwardly open rigid

- 4 -

pocket 12 for depositing various objects, and a frontal compartment which can receive musicassettes 13.

0007138

What we claim is:

1. A rigid object pocket with musicassette compartment, consisting of a shaped thin walled casing 1 with its upper and rear sides flat and open, and comprising in the lower region of the front side a receding compartment 2 provided with a downwardly swivelling closure cover 3.

2. A rigid pocket as claimed in claim 1, wherein the receding compartment 2 is of parallelepiped shape, and comprises internally one or more sets of parallel equidistant opposing ribs 22 for inserting small parallelepiped objects such as musicassettes.

3. A rigid pocket as claimed in claim 1, wherein to the sides of the parallelepiped receding compartment 2 there are provided two interspaces 4, the outer wall of which is provided with a bore 7, the two bores provided at the interspaces being coaxial to define the swivel axis for the cover 3.

4. A rigid pocket as claimed in claim 1, wherein the cover 3 comprises two symmetrical side lugs 5 orthogonal to its plane, each being provided with an external pivot 6, the two pivots being aligned and able to be inserted resiliently into the bores in the external walls of the interspaces 4.

5. A rigid pocket as claimed in claim 1, wherein the upper edge of the cover 3 is provided with a longitudinal rounded tooth 11, and the upper edge of the receding compartment 2 comprises a groove 8 into which said rounded tooth 11 of the cover 3 is resiliently inserted and retained.

6. A rigid pocket as claimed in claim 1, wherein the cover comprises a central raised portion 33 to facilitate its opening.

12

1

99

10

99

10

4

22

10

200

22

2

13

99

5

3

FIG.1

FIG.12

1

**FIG. 2**

**FIG. 3**

**FIG. 4**

FIG. 5

FIG. 6

FIG. 7

FIG. 8

0007138

FIG. 11

FIG. 9

FIG. 10

0007138

## EUROPEAN SEARCH REPORT

European Patent Office

Application number

EP 79 200 369.1

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | DE - U - 7 332 148 (SCHOTT ELEKTRO-WÄRME)  <br> * claims 1, 4, 6, 7; fig. 3 *  <br> --- | 1-4, 6 | G 11 B  1/02 <br> G 11 B  23/02 |
| | DE - U - 7 623 675 (H.-J. OTTO) <br> * claims 1 and 11 * <br> --- | 1 | |
| | DE - U - 7 310 057 (COMPAGNIE GENERALE BELGE DES ISOLANTS) <br> * fig. 1 * <br> --- | 2 | TECHNICAL FIELDS SEARCHED (Int.Cl.³) <br><br> B 65 D  85/67 <br> G 11 B  1/02 <br> G 11 B  23/02 |
| | US - A - 3 907 116 (AMPEX CORPORATION) <br> * fig. * <br> ---- | 2 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 19-10-1979 | LEITHÄUSER |

EPO Form 1503.1  06.78